# EUROPÄISCHE PATENTSCHRIFT

(11) **EP 3 293 589 B1**
(45) Veröffentlichungstag und Bekanntmachung des Hinweises auf die Patenterteilung: **15.06.2022**
(21) Anmeldenummer: 17189355.5
(22) Anmeldetag: 05.09.2017
(51) Int. Cl.: G05B 19/042, H04L 29/08, G01M 17/007, G05B 19/4063, G05B 19/4093, H04L 12/24

(54) **STEUEREINRICHTUNG FÜR EINE MASCHINE**
CONTROL EQUIPMENT FOR A MACHINE
DISPOSITIF DE COMMANDE POUR UNE MACHINE

(30) Priorität: 07.09.2016 DE 102016217030
(43) Veröffentlichungstag der Anmeldung: 14.03.2018
(73) Patentinhaber: MAHA Maschinenbau Haldenwang GmbH & Co. KG, 87490 Haldenwang (DE)
(72) Erfinder: Stulle, Markus Andreas, 80797 München (DE)
(74) Vertreter: MERH-IP Matias Erny Reichl Hoffmann Patentanwälte PartG mbB

(56) Entgegenhaltungen:
- DE-A1- 10 236 392
- DE-A1-102011 077 572
- DE-A1-102012 221 462
- DE-A1-102014 106 409
- US-A1- 2014 379 626
- US-A1- 2015 057 818
- US-A1- 2015 330 869
- Anonymous: "Firmware", Wikipedia, die freie Enzyklopädie. , XP002782425, Gefunden im Internet: URL:https://de.wikipedia.org/wiki/Firmware [gefunden am 2018-06-22]

## Beschreibung

Die vorliegende Erfindung betrifft eine Steuereinrichtung einer Maschine, die drahtlos, direkt und in Echtzeit mit einem entfernt zu der Maschine angeordneten Hintergrundverwaltungssystem (bspw. eine Serverfarm, ein Cloud-Service-System, ein Rechenzentrum, ein Netzserver) kommunizieren kann. Bevorzugt ist die Maschine eine Fahrzeugprüf- oder Hebevorrichtung.

Im Stand der Technik sind zwar Maschinen mit Steuereinrichtung bekannt, jedoch können diese Maschinen bzw. Steuereinrichtungen nicht direkt, in Echtzeit und drahtlos Daten mit einer Serverfarm austauschen. Stattdessen werden bekannte Maschinen mittels einer Kabelverbindung mit einem lokalen Personal Computer (PC) verbunden ist, der dann an ein Netzwerk angeschlossen werden kann.

Bisherige Maschinen können damit nicht drahtlos und direkt mit einem Netzwerk kommunizieren, d.h. ohne Umweg über den angeschlossenen PC, und damit auch nicht eigenständig Daten an ein Netzwerk versenden. Die Hardwarearchitektur, die eine Reihe von Zwischenspeicherschritten und Weiterleitungen von Daten über den PC bedingt, erlaubt auch keine Weitergabe von Daten in Echtzeit, d.h. die Datenweitergabe kann zeitlich nicht mit der Erzeugung von Daten der Sensoren und der Aktoren der Maschine Schritt halten. Die Verarbeitung und die Nutzung von Echtzeitdaten werden somit erschwert, was einer Verbesserung der Zuverlässigkeit, Produktionsverfügbarkeit, Kosteneffizienz und/oder der effizienten Ausführung und Planung von Wartungs- und Reparaturarbeiten im Wege steht.

DE 10 2011 077572 A1 beschreibt ein Verfahren zum Betreiben eines programmgesteuerten Haushaltsgerätes, welches eine Speichereinrichtung, in welcher zumindest zwei auswählbare Betriebsprogramme zum Steuern von Betriebsabläufen des Haushaltsgerätes abgelegt sind. In DE 10 2014 106409 A1 wird ein System zum Konfigurieren und Überwachen eines Positionssensors, der zum Ermitteln einer Positionslage, Winkellage, Drehzahl und/oder Geschwindigkeit einer Maschinenkomponente dient, offenbart. DE 10 2012 221462 A1 zeigt ein Verfahren zum Abfragen von Fahrzeugdaten, insbesondere von Daten, die mit der Laufleistung und/oder dem Verschleiß des Fahrzeugs in Verbindung stehen. US 2015/330869 A1 beschreibt ein Überwachungssystem für ein Flugzeugtriebwerk, das eine Vielzahl von drahtlosen Triebwerkssensoren umfasst, die Triebwerksparameter basierend auf einem Triebwerkabtastalgorithmus erfassen. In US 2015/057818 A1 wird ein System und ein Verfahren zum Downloaden und Installieren von Software-Updates auf die Steuereinheit einer Beregnungsanlage gezeigt. US 2014/379626 A1 beschreibt eine Vorrichtung zur Vorhersage des zukünftigen Verhaltens von Geräten in einer industriellen Automatisierungsumgebung.

Es ist eine Aufgabe der vorliegenden Erfindung, eine Steuereinrichtung einer Maschine anzubieten, die direkt, echtzeitfähig und drahtlos Daten mit einem Netzwerk austauschen kann. Weiterhin soll ein Hintergrundverwaltungssystem angeboten werden, das von der Steuereinrichtung der Maschine zugesendete Daten verarbeitet und auswertet, um einem Nutzer Informationen über den Zustand und andere Eigenschaften und Funktionen der Maschine zur Verfügung stellen zu können. Weiterhin sollen zugehörige Reparatur- und Wartungsverfahren sowie ein Inbetriebnahmeverfahren der Maschine vorgestellt werden, die eine höhere Kosteneffizienz gewährleisten, genauso wie effizientere Arbeitsabläufe, z.B. während der Reparatur oder Wartung, und dem Nutzer verbesserte Sicherheit bieten. Zusammenfassend soll eine Maschine angeboten werden können, die in punkto Zuverlässigkeit, Produktionsverfügbarkeit, Kosteneffizienz und/oder Durchführung und Planbarkeit von Wartungs- und Reparaturarbeiten verbessert ist.

Die Aufgabe wird von der Erfindung gemäß den unabhängigen Patentansprüchen gelöst. Weitere bevorzugte Weiterentwicklungen der Erfindung sind in den abhängigen Patentansprüchen beschrieben.

Die erfindungsgemäße Steuereinrichtung zur Steuerung einer Maschine ist dazu eingerichtet, mit einem oder mehreren Aktoren der Maschine Daten auszutauschen. Die Daten können u.a. Steuersignale enthalten, wie auch Messwerte und Zustandsinformationen über den Aktor. Ferner ist die Steuereinrichtung dazu eingerichtet, mit einem oder mehreren Sensoren der Maschine Daten auszutauschen. Der Datenaustausch zwischen der Steuereinrichtung und den Aktoren/Sensoren kann uni- oder bidirektional ausgeführt sein.

Die Maschine umfasst Fahrzeug-Hebevorrichtungen, FahrzeugBremsenprüfstände, Fahrzeug-Prüfstraßen, Fahrzeug-Leistungsprüfstande, Abgasmessmessgeräte und/oder andere Prüfvorrichtungen für Kraftfahrzeuge.

Der Datenaustausch zwischen der Steuereinrichtung und den Aktoren/Sensoren erfolgt im Hinblick auf eine bessere Wartbarkeit, Zugänglichkeit Einsatzflexibilität und Gewichtsersparnis besonders bevorzugt kabellos, bspw. über eine Funkstrecke zwischen der Steuereinrichtung und einem Aktor oder Sensor.

Ferner enthält die Steuereinrichtung eine Recheneinheit. Die Recheneinheit kann bspw. ein Mikrocontroller, ein ASIC oder ein Mikroprozessor sein. Die Recheneinheit ist insbesondere dazu eingerichtet, die Aktoren der Maschine anzusteuern und/oder Daten von den Sensoren abzufragen.

Ferner enthält die Steuereinrichtung eine Drahtlos-Sende/Empfangseinheit, die insbesondere dazu eingerichtet ist, Daten von den Aktoren und/oder Sensoren, bevorzugt auf Befehl der Recheneinheit, drahtlos an ein oder mehrere Netzwerk(e), die lokal oder bevorzugt global sind, zu übertragen und/oder Daten von dem Netzwerk zu empfangen. Das Netzwerk kann ein lokales oder globales Netzwerk sein. Das Netzwerk ist besonders bevorzugt das Internet.

Die Steuereinrichtung kann bevorzugt fest mit der Maschine verbunden sein. Die eigene Drahtlos-Sende/Empfangseinheit der Steuereinrichtung kann ein Funkchip sein, der besonders bevorzugt ein mikroelektronischer Wireless local area network (WLAN)-Baustein ist. Die Drahtlos-Sende/Empfangseinheit kann aber auch ein mikroelektronischer Baustein sein, der eine oder mehrere andere Drahtlosdatenübertragungswege beherrscht, bspw. standardisierte Methoden wie Bluetooth, GSM, UMTS, LTE, usw. oder auch proprietäre Methoden. Die Steuereinrichtung ermöglicht es der Maschine somit, dass diese direkt, d.h. ohne Umweg über einen angeschlossenen PC oder dgl., Daten, z.B. Telemetriedaten der Aktoren und/oder Sensoren, an ein Netzwerk, das besonders bevorzugt das Internet ist, bzw. einen netzwerk-/internetangebundenen Router oder dgl. versenden kann. Ferner ermöglicht die Drahtlos-Sende/Empfangseinheit, dass das oben beschriebene Übertragen von Daten von und zu der Fahrzeugprüfeinrichtung kabelungebunden, d.h. drahtlos, erfolgen kann.

Ferner ist die Hardwarearchitektur der Steuereinrichtung derart im Hinblick auf ihre Komplexität reduziert, dass Daten sehr schnell verarbeitet werden können, so dass diese Verarbeitung echtzeitfähig ist. Echtzeitfähig soll hier insbesondere bedeuten, dass die Steuereinrichtung mit den Ereignissen der Steuerstrecke Schritt halten kann. In anderen Worten, bspw., kann dies bedeuten, dass die Steuereinrichtung schnell genug, z.B. in wenigen Millisekunden, einen Nothalt einer Fahrzeughebebühne veranlassen kann, wenn die Hebebühne beim Auf- oder Abfahren auf ein Hindernis aufläuft. Auch kann dies bedeuten, dass die von Sensoren erzeugten Messwertdaten, die bspw. alle 10, 20, 30 oder 50 Millisekunden (oder in größeren oder kleineren Zeitabständen) von dem Sensor erzeugt werden können, mit der gleichen oder einer ähnlichen Frequenz von der Steuereinrichtung empfangen und an das Netzwerk weitergeleitet/übertragen werden können. Diese Echtzeitfähigkeit kann beispielsweise dadurch erreicht werden, dass eine besonders bevorzugte erfindungsgemäße Steuereinrichtung als Hauptkomponenten im Wesentlichen nur die Drahtlos-Sende/Empfangseinheit, die Recheneinheit (besonders bevorzugt beide in einem einzelnen mikroelektronischen Baustein kombiniert) und elektrische Verbindungs- und Ein- /Ausgangsleitungen aufweist. Diese können zu einem Kernmodul zusammengefasst sein. Dieses Kernmodul ist derart reduziert im Hinblick auf die Schaltungskomplexität und die notwendige Anzahl der erforderlichen mikroelektronischen Bausteine, dass die Steuereinrichtung sehr schnelle Datenverarbeitung anbieten kann; und insbesondere wird die Echtzeitfähigkeit weiter unterstützt, wenn die Recheneinheit ein leistungsfähiger, moderner Mikrocontroller, ASIC oder Mikroprozessor mit hoher Arbeitsgeschwindigkeit ist. Eine hohe Arbeitsgeschwindigkeit kann bspw. durch eine hohe Taktfrequenz von mehreren MHz bis zu einigen GHz erreicht werden und/oder durch mehrere Rechenkerne und einen schnellen Cache. Selbstverständlich kann das Kernmodul weitere mikroelektronische Komponenten enthalten, jedoch geht dies u.U. zu Lasten der Datenverarbeitungsgeschwindigkeit in der Steuereinrichtung.

Die direkte, echtzeitfähige und drahtlose Kommunikation der Steuereinrichtung bzw. der Maschine mit dem Netzwerk, bevorzugt dem Internet, ermöglicht eine Reihe von Anwendungsvorteilen, die sich insbesondere unter den Schlagworten Zuverlässigkeit, Maschinenverfügbarkeit, Kosteneffizienz und/oder bessere Planbarkeit von Wartungs- und Reparaturarbeiten zusammenfassen lassen. So kann die Zuverlässigkeit bspw. dadurch gesteigert werden, dass kleinere Arbeitsabweichungen der Maschine, z.B. ein zwar noch nicht sichtbares aber in den Messdaten der Hubspindel einer Hubvorrichtung erkennbares Abweichen von den Sollwerten, anhand der in Echtzeit übermittelten Telemetriedaten sofort erkannt wird und mögliche Wartungszyklen entsprechend angepasst werden, um größere Reparaturen oder Defekte zu verhindern. Dies wiederrum erhöht dann auch die Maschinenverfügbarkeit und damit auch die Kosteneffizienz, da Defekte ggf. ganz vermieden werden können. Wartungs- und/oder Reparaturarbeiten können zudem vorgeplant werden und/oder vorhergesagt werden. Die Daten können auch dabei helfen, die ggf. benötigten Ersatzteile zu identifizieren. Bei bidirektionalen Datenverbindungen können ferner Updates der Gerätesteuerfirmware zeitnah und mit wenig Aufwand aufgespielt werden. Die kabellose Anbindung an ein Netzwerk ermöglicht ferner auch höchstmögliche Flexibilität bei der Aufstellung und Anordnung der Maschine.

Ferner ist die Steuereinrichtung bzw. die Maschine über das Netzwerk mit einem Hintergrundverwaltungssystem verbunden, an das die Daten der Steuereinrichtung übertragen werden und/oder von dem Daten an die Steuereinrichtung übertragen werden.

Die Anbindung an ein Hintergrundverwaltungssystem, das bevorzugt eine Serverfarm, ein Rechenzentrum oder dgl. ist und das besonders bevorzugt über das Internet mit der Steuereinrichtung bzw. der Maschine verbunden ist, erlaubt es, dass beispielsweise in der Steuereinrichtung kein Datenspeicher vorgesehen sein muss, der größere Datenmengen speichert. Es genügt ein kleinerer Datenspeicher, der groß genug ist, Daten zwischen zu speichern, die zeitnah an das Netzwerk versendet oder von dort empfangen werden sollen. Die eigentliche Datenspeicherung erfolgt dann in dem Hintergrundverwaltungssystem, das entfernt von der Maschine angeordnet sein kann. Besonders bevorzugt führt das Hintergrundverwaltungssystem für jede Steuereinrichtung bzw. Maschine eine elektronische Geräteakte mit den gerätespezifischen Informationen. Hier können beispielsweise auch individuelle Konfigurationen einer Maschine abgelegt sein, die beispielsweise bei einer Hebebühne die Abschalthöhe oder den Quetschschutzstopp bedienerspezifisch festlegt. Die Externalisierung der Datenspeicherung und rechenintensiver Softwarefunktionen von der Maschine bzw. der Steuereinrichtung hin zu einem Hintergrundverwaltungssystem erlaubt somit eine weitere Beschleunigung der Arbeitsgeschwindigkeit der Steuereinheit, die die Echtzeitfähigkeit der Datenverarbeitung unterstützt.

Ferner kann die Steuereinrichtung eine elektronische Baugruppe aufweisen, auf der die Recheneinheit und die Drahtlos-Sende/Empfangseinheit bzw. das Kernmodul angeordnet sein können und diese mittels Leiterbahnen der Leiterplatte miteinander elektrisch verbunden sein können. Die Leiterplatte kann ferner Ein- und Ausgänge für Leitungen zu bzw. von den Aktoren und/oder Sensoren und einen Spannungsversorgungsanschluss aufweisen. Ferner optional können ein Kabelanschluss für Datenverbindungen, z. B ein USB-Anschluss, und/oder oder Steckbrücken vorgesehen sein. Die reduzierte Komponentenanzahl auf der Leiterplatte der Steuereinrichtung erlaubt eine kompakte Bauform.

Ferner kann die Recheneinheit und/oder die Steuervorrichtung einen Speicher für die Firmware der Steuereinrichtung und optional einen bevorzugt flüchtigen Speicher für das Zwischenspeichern von ein- und ausgehenden Daten aufweisen. Die Größe der Speicherbausteine ist dabei bevorzugt so klein bemessen, dass die Steuereinrichtung eine möglichst kompakte Bauform aufweist, und so groß bemessen, dass die Firmware und zumindest die anfallende Datenmenge der Sensoren/Aktoren sowie deren Steuerbefehle über einen festgelegten Zeitraum, z.B. von einigen Sekunden bis wenigen Stunden, zwischengespeichert werden können.

Ferner kann der Speicher der Steuereinrichtung vor einer Inbetriebnahme ohne Firmware ausgeliefert werden. Die Steuereinrichtung kann dann dazu eingerichtet sein, mittels einer Datenverbindung über das Netzwerk die Firmware von dem Hintergrundverwaltungssystem zu beziehen bzw. übertragen zu bekommen und zu speichern. Ferner kann die Steuereinrichtung dazu eingerichtet sein, Firmwareaktualisierungen in der gleichen Weise zu erhalten. Die Zentralisierung des Verwaltens der Firmware und von Updates ermöglicht es, dass mechanische und elektronische Komponenten in der Fertigung und der Auslieferung identisch bzw. sehr ähnlich sein können und eine individuelle, benutzerspezifische Konfiguration im Nachgang, bspw. bei der Inbetriebnahme, vorgenommen werden kann. Diese Konfiguration kann dann auch in der zentral verwalteten Geräteakte der Maschine sicher gespeichert werden. Selbst ein Neukauf wird dadurch für den Benutzer einfacher, da er die Konfiguration einer Vorgängerprüfvorrichtung mit wenig Aufwand auf eine neue übertragen lassen kann. Auch kann die Gerätefirmware nicht vor Ort beschädigt oder verändert werden, was die Betriebszuverlässigkeit noch weiter steigert.

Ferner kann die Anbindung an ein Hintergrundverwaltungssystem auch insofern für den Benutzer von Vorteil sein, dass das Hintergrundverwaltungssystem eine Internetzzugriffssoftware oder dgl. bereitstellen kann, so dass ein autorisierter Nutzer Daten/Informationen über die Maschine jederzeit in Echtzeit und von jedem entfernten Punkt mit Internetanbindung beziehen kann bzw. sich darstellen lassen kann oder sogar eine Fernsteuerung ausführen kann. Eine Fernsteuerung ist grundsätzlich seitens der Maschinenrichtlinien unterdrückt, kann aber aktiviert bzw. eingerichtet werden. Die Darstellung der Maschine und deren Messwerte können anhand einer grafischen Mensch-Maschine-Schnittstelle für den Benutzer aufbereitet sein.

Ferner kann die Datenverbindung zu dem Hintergrundverwaltungssystem zumindest eine drahtgebundene Datenverbindungsstrecke zwischen der Steuereinrichtung und einer netzwerk- oder internetfähigen Einrichtung sein. Diese Datenverbindung kann bevorzugt bei der Inbetriebnahme der Maschine, bevorzugt temporär, eingerichtet werden. Diese Datenverbindung kann auch im Betrieb für das Übertragen von Daten oder für das Aufspielen von Updates der Firmware genutzt werden. Grundsätzlich ist es vorteilhaft, dass mit dieser Datenverbindung/diesem Kommunikationspfad ein weiterer Weg für einen komplettdurchgriff auf die Steuereinrichtung und das Hintergrundveraltungssystem ermöglicht wird. Die netzwerk- oder internetfähige Einrichtung kann bspw. ein PC oder eine anderes elektronisches internetfähiges Gerät, bspw. ein Smartphone, sein. Ferner kann zumindest eine kabellose oder kabelgebundene Datenverbindungsstrecke zwischen der netzwerk- oder internetfähigen Einrichtung und dem Hintergrundverwaltungssystem vorgesehen sein.

Ferner kann die Drahtlos-Sende/Empfangseinheit ein Kryptografiemodul aufweisen, das dazu eingerichtet sein kann, Daten, die von der Drahtlos-Sende/Empfangseinheit versendet oder empfangen werden, zu ver- bzw. entschlüsseln oder mit einer digitalen Signatur zu versehen. Dies gewährleistet die Vertraulichkeit und die Integrität der übertragenen Daten und den exklusiven Zugriff auf die Daten für authentifizierte Benutzer.

Die Steuereinrichtung kann ferner dazu eingerichtet sein, in vorbestimmten Zeitabständen, die gleichmäßig oder unregelmäßig sein können, Daten an das Netzwerk zu versenden, um diese über das Netzwerk an das Hintergrundverwaltungssystem zu übertragen. Die Daten können insbesondere Messwerte und Zustandsinformationen der Aktoren und Sensoren der Maschine enthalten. Die Übertragung erfolgt bevorzugt im "Push-Verfahren". Beispielsweise weist die Recheneinheit die Sensoren an, Messungen vorzunehmen, die Werte aufzunehmen und als Messdaten an die Steuereinrichtung zu übertragen. Die Recheneinheit kann dann unmittelbar nach Eingang der Messdaten oder dgl. die Übertragung dieser Daten an das Netzwerk und das Hintergrundverwaltungssystem anweisen. Die Übertragung erfolgt über die Funkdatenverbindung zwischen der Drahtlos-Sende/Empfangseinheit und dem Netzwerk bzw. einem Netzwerkzugang, wie einem Router. Das Hintergrundverwaltungssystem kann dann die Daten über das Netzwerk, an das es angeschlossen ist, empfangen. Ein Benutzer kann ferner Zugriff auf die Daten erhalten, beispielsweise indem er sich mittels Web-App oder einer anderen Schnittstelle in die entsprechende Geräteakte auf dem Hintergrundverwaltungssystem einloggt und entweder bereits abgespeicherte Informationen abruft und/oder Echtzeitdaten, die von der Steuereinrichtung an das Hintergrundverwaltungssystem gesendet werden, abruft ("Pull-Verfahren"). Der Benutzer kann somit einen umfassenden "live"-Überblick über die Funktionstüchtigkeit, den allgemeinen Zustand, usw. der Maschine gewinnen. Bei bidirektionalen Datenverbindungen kann er auch Anweisungen und Steuerbefehle aus der Entfernung an die Steuereinrichtung weitergeben, bspw. für eine Fernsteuerung der Maschine.

Die übertragenen Daten sind bevorzugt Messdaten des Sensors bzw. der Sensoren der Maschine und/oder Mess- bzw. Zustandsdaten des Aktors bzw. der Aktoren der Maschine.

Für die Übertragung zwischen der Steuereinrichtung und dem Netzwerk kann bevorzugt das Message Queue Telemetry Transport (MQTT) Protokoll verwendet werden. Dadurch kann das Datenvolumen, das übertragen wird, reduziert werden, was die Echtzeitfähigkeit weiter verbessert. Im Sinne der Erfindung sind auch proprietäre Protokolle verwendbar, die diese Eigenschaften in sich vereinigen.

Ein erfindungsgemäßes Hintergrundverwaltungssystem ist dazu eingerichtet, Daten von einer erfindungsgemäßen Steuereinrichtung übertragen zu bekommen oder dahin zu übertragen bzw. zu empfangen und zu senden. Ferner ist das Hintergrundverwaltungssystem mit einem oder mehreren Netzwerk(en) verbunden und weist eine Vielzahl Rechner auf, die insbesondere dazu eingerichtet sind, Daten zu empfangen, zu speichern, zu verarbeiten und/oder an die Steuereinrichtung oder an eine mit dem Netzwerk verbundenen Nutzerendeinrichtung zu übertragen. Das Hintergrundverwaltungssystem ist bevorzugt eine Serverfarm, ein Rechenzentrum oder dgl. Das Hintergrundverwaltungssystem kann dazu eingerichtet sein, auf einen Abruf, der über das Netzwerk von einem Nutzer/Nutzerendeinrichtung eingeht, angeforderte Daten per Hypertext Markup Language (HTML) Protokoll auszugeben und deren Anzeige in vorbestimmten Zeitabständen zu aktualisieren.

Ferner ist das Hintergrundverwaltungssystem dazu eingerichtet, für jede Steuereinrichtung bzw. Maschine eine digitale Geräteakte zu speichern, die Informationen über die Maschine enthält, insbesondere die daran durchgeführten Servicemaßnahmen, Fehlerspeichereinträge (Diagnostic Trouble Codes - DTC), übermittelte Rohdaten der Sensoren und Aktoren, Auswertungsdaten der Rohdaten, eine oder verschiedene Konfiguration(en) der Maschine und/oder die Firmware, wobei die Daten der Geräteakte verschlüsselt abgespeichert sind.

Ferner kann das Hintergrundverwaltungssystem dazu eingerichtet sein, Rohdaten der Sensoren und Aktoren der Maschine, die von der Steuereinrichtung übertragen wurden, auszuwerten und Auswertedaten zu erstellen, die Informationen über den Zustand der Maschine, deren Verwendung, deren Einsatzzeiten oder dgl. enthalten können.

Ferner kann das Hintergrundverwaltungssystem dazu eingerichtet sein, die Auswertedaten automatisch an einen Nutzer/eine Nutzerendeinrichtung zu übertragen, wenn ein vordefiniertes Ereignis bei der Auswertung ermittelt wurde. Das Ereignis kann beispielsweise das Eintreten eines vorbestimmten Zustandes, einer vordefinierten Verwendung, usw. sein. Beispielsweise können die Auswertedaten Informationen über eine Reparaturnotwendigkeit der Maschine enthalten und das vordefinierte Ereignis kann sein, dass ein Defekt der Maschine detektiert wurde. Im Falle eines Defektes wird/werden dann sofort ein oder mehrere vorbestimmte Benutzer informiert, indem eine Nachricht an einen oder mehrere Nutzerendeinrichtungen gesendet wird, die die Informationen über den Defekt enthalten. Ein Servicetechniker kann somit bereits alle Informationen über den Defekt, die mögliche Reparatur und die dafür benötigten Ersatzteile und Werkzeuge im Voraus, d.h. vor einem Eintreffen bei der defekten Maschine, erhalten und somit zeiteffizient und zielgenau die Reparatur durchführen. Gleiches gilt auch für andere Serviceaufträge, wie bspw. Wartungen. Ferner kann ein entsprechendes Verfahren erfindungsgemäß vorgesehen sein.

Die Auswertungsdaten können nach vorbestimmten Mustern bearbeitete Rohdaten der Sensoren und Aktoren der Maschine sein. Bspw. können in dem Hintergrundverwaltungssystem Rohdaten eines Temperatursensors, der an der Maschine montiert ist und die Aktorttemperatur, bspw. der Motor einer Hubspindel, misst, zeitlich gemittelt werden und mit einem maximalen Mittelwert, der in dem System vordefiniert ist, verglichen werden. Wenn die gemittelte Temperatur den maximalen Mittelwert überschreiten sollte, so könnte auf eine Überbelastung des Aktors oder einen Defekt geschlossen werden und eine automatische Nachricht an einen vorbestimmten Benutzer versendet werden. Die Nachricht kann beispielsweise alle Temperaturdaten grafisch aufbereitet enthalten sowie eine automatisiert erstellte Fehlerdiagnose, die aufgrund des beobachteten Temperaturverlaufes als wahrscheinlich angesehen werden kann. Der Benutzer, bspw. ein Servicetechniker, kann dann die möglicherweise notwendige Reparatur optimal planen und vor Ort mit geringem Zeitaufwand, bspw. wird keine Fehlerdiagnose vor Ort mehr nötig oder sie benötigt weniger Zeit, die Reparatur durchführen.

Weitere mögliche Szenarien können sein, dass die Auswertedaten Informationen darüber enthalten, ob die Maschine ggf. wartungsbedürftig ist oder defekt. Beispielsweise kann ein nur geringfügig abnormales Verhalten einer Hubspindel einer KFZ-Hebebühne darauf hinweisen, dass zwar nicht unmittelbar ein Defekt bevorsteht, aber dass eine frühzeitige Wartung einen Defekt verhindern kann, so dass längere Produktionsausfälle aufgrund eines Defektes verhindert werden können. Ferner kann auch sichergestellt werden, dass die Maschine sach- und fachgerecht verwendet wird. Beispielsweise kann eine Warnung an einen Servicetechniker oder einen anderen Benutzer von dem Hintergrundverwaltungssystem ausgegeben werden, wenn bspw. ein Dehnmessstreifen in einem Hubarm einer Hebebühne zu häufig Dehnungen erfasst, die außerhalb der Vorrichtungsspezifikationen liegen; bspw. weil die Fahrzeuge relativ zu den Hubsäulen nicht auslegungsgemäß positioniert und an den Aufnahmepunkten platziert werden.. Ferner können auch stillgelegte Maschinen erfasst werden, bspw. wenn diese über einen längeren Zeitraum nicht mehr eingeschaltet wurde und damit ein Aktor nicht mehr mit Strom-/Spannung beaufschlagt war. Mit anderen Worten kann bei der Abwesenheit von Strom- /Spannungswerten davon ausgegangen werden, dass die Maschine außer Betrieb genommen wurde. In diesem Fall, kann der Benutzer kontaktiert werden, um ihm bspw. eine für seinen Betrieb besser geeignete Maschine anzubieten.

Die Aufbereitung der Rohdaten der Aktorwerte, wie Spannung, Strom, etc., und von Sensoren, wie Temperatur, Dehnung, Wegstrecke, Druck, Ausrichtung, etc., kann somit dem Benutzer einen erheblichen Mehrwert bieten. Insbesondere werden Wartungs- und Reparaturarbeiten vorhersagbarer ("predicted maintenance"). Die Maschine fällt optimaler Weise nicht mehr länger aufgrund von Defekten aus.

Erfindungsgemäß kann auch ein System zumindest umfassend das Hintergrundverwaltungssystem und die Steuereinrichtung vorgesehen sein. Ferner kann die Steuereinrichtung des Systems dazu eingerichtet sein, nach Empfang einer vorbestimmten Befehlssequenz, die bspw. über eine Tastatur an der Maschine eingegeben wurde, ein Notfallsignal an das Hintergrundverwaltungssystem zu übertragen. Das Hintergrundverwaltungssystem des Systems kann einen Ruf oder eine Nachricht an eine vorbestimmte Kontaktstelle abgeben, der/die einen Benutzer an der vorbestimmten Kontaktstelle über eine Notfallanfrage informiert und gleichzeitig die Daten der Maschine anzeigt. Dies ermöglicht eine Direkt- und Sofortbenachrichtigung an vorbestimmte Servicestellen.

Ferner ist die Steuereinrichtung des Systems dazu eingerichtet, vor dem Senden eines Steuerbefehls an einen Aktor der Maschine eine Anfrage an das Hintergrundverwaltungssystem zu übertragen und den Steuerbefehl nicht zu senden, wenn das Hintergrundverwaltungssystem das Senden des Steuerbefehls nicht freigibt. Dies ermöglicht, dass die Benutzung der Maschine zentral autorisiert bzw. freigegeben oder blockiert werden kann.

Ein erfindungsgemäßes Verfahren zur Inbetriebnahme einer Steuereinrichtung weist den Schritt auf, dass ein PC oder ein anderes internetfähiges Elektrogerät per Kabelverbindung mit der Steuereinrichtung verbunden wird. Ferner wird der PC mit einem Netzwerk, an das Hintergrundverwaltungssystem angebunden ist, verbunden, und eine Firmware von einem für die Maschine vorbestimmten Speicherplatz (der Geräteakte der spezifischen Maschine) des Hintergrundverwaltungssystems heruntergeladen und in der Steuereinrichtung abgespeichert. Dies erlaubt bspw. die Auslieferung von hardwareseitig identischen oder ähnlichen Maschinen, die dann erst bei dem Benutzer vor Ort mittels Software auf dessen Wünsche benutzerspezifisch eingerichtet werden können. Weiterhin kann das Verfahren nicht nur zur Inbetriebnahme herangezogen werden. Weitere Beispiele für die Anwendung wären, Firmwareaktualisierungen und die Datenübertragung zwischen dem Hintergrundverwaltungssystem und der Steuereinrichtung insbesondere wenn bspw. eine kabellose Verbindung ausgefallen ist oder nicht eingerichtet werden kann. Der letztgenannte Fall wird bevorzugt für den temporären Einsatz herangezogen werden können, bspw. wenn die kabellose Datenverbindung ausfallen sollte.

Zusammenfassend ermöglicht die Erfindung somit die Bereitstellung einer Maschine bzw. einer Steuereinrichtung für eine Maschine, die direkt, echtzeitfähig und kabellos mit einem Netzwerk, bevorzugt dem Internet, Daten austauscht. Dies ermöglicht es, dass Telemetriedaten der Maschine in Echtzeit bzw. nur mit geringen Verzögerungszeiten auf einem entfernten Rechner, Smartphone, oder dgl. angezeigt werden können, dass ein Hintergrundverwaltungssystem aus den empfangenen Daten Diagnostik- und Auswertungsdaten erstellen kann, die bspw. Wartungs- und Reparaturarbeiten vorhersagbar und/oder planbarer machen, dass Firmwareupdates ohne Vorortpräsenz eines Servicetechnikers von dem Hintergrundverwaltungssystem auf die Maschine aufgespielt werden können, dass eine Fernbedienung der Maschine ermöglicht wird, dass Mietmodelle mit Kosten je Benutzung der Maschine möglich gemacht werden, dass maschinenspezifische Daten und Konfigurationen zentral und sicher gespeichert werden können, usw. Weiterhin werden ein Hintergrundverwaltungssystem sowie entsprechende Wartungs- und Inbetriebnahmeverfahren angeboten. Zusammenfassend werden somit die Zuverlässigkeit, Produktionsverfügbarkeit, Kosteneffizienz und/oder die Planbarkeit und Vorhersagbarkeit von Wartungs- und Reparaturarbeiten der Maschine verbessert.

Die Erfindung wird im Folgenden exemplarisch mit Bezug auf die beigefügten, schematischen Zeichnungen beschrieben. Es zeigen
Fig. 1 zeigt eine Maschine mit erfindungsgemäßer Steuereinrichtung, die mit einem erfindungsgemäßen Hintergrundverwaltungssystem verbunden ist,
Fig. 2 zeigt eine Maschine mit erfindungsgemäßer Steuereinrichtung während der Inbetriebnahme,
Fig. 3 zeigt eine erfindungsgemäße Steuereinrichtung.

Im Folgenden werden verschiedene Beispiele der vorliegenden Erfindung detailliert unter Bezugnahme auf die Figuren beschrieben. Gleiche bzw. ähnliche Elemente in den Figuren werden hierbei mit gleichen Bezugszeichen bezeichnet. Die vorliegende Erfindung ist jedoch nicht auf die beschriebenen Ausführungsmerkmale begrenzt, sondern umfasst weiterhin Modifikationen von Merkmalen der beschriebenen Beispiele und Kombination von Merkmalen verschiedener Beispiele im Rahmen des Schutzumfangs der unabhängigen Ansprüche.

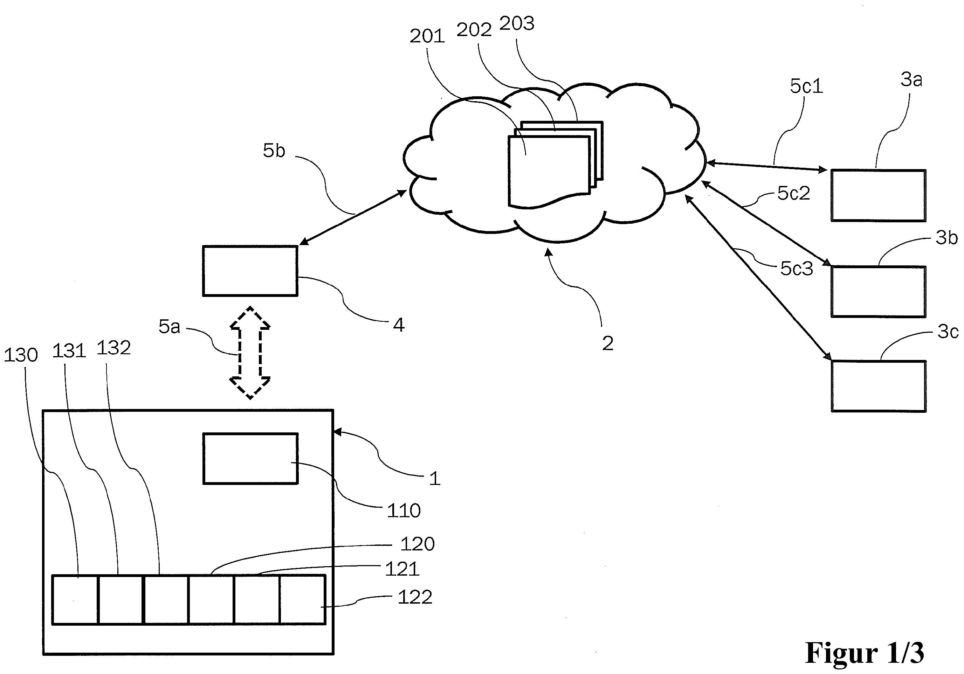

Figur 1 zeigt eine Maschine 1, die insbesondere eine Steuereinrichtung 110, Sensoren 120-122 (mehr als drei und weniger als drei Sensoren sind möglich) und Aktoren 130-132 (mehr als drei und weniger als drei Aktoren sind möglich) aufweist. Die Maschine 1 ist beispielsweise eine Kraftfahrzeughebevorrichtung, ein Kraftfahrzeug-Bremsenprüfstand, ein Kraftfahrzeug-Leistungsprüfstand oder dgl. Die Maschine kann insbesondere Fahrzeug-Hebevorrichtungen, Fahrzeug-Bremsenprüfstände, Fahrzeug-Prüfstraßen, Fahrzeug-Leistungsprüfstande, Abgasmessmessgeräte und/oder andere Prüfvorrichtungen für Kraftfahrzeuge umfassen.

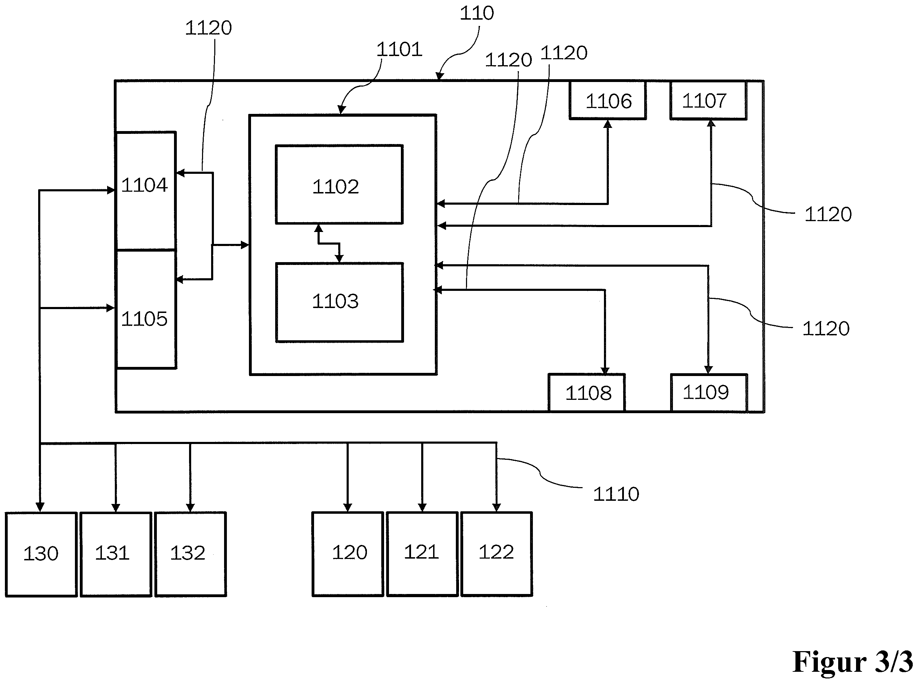

Die Steuereinrichtung 110, die in Figur 3 im Detail dargestellt ist, ist drahtlos bzw. kabellos mit einem Netzwerk, bevorzugt dem Internet, verbunden. An das Netzwerk ist ein Hintergrundverwaltungssystem 2 angeschlossen, das elektronische Geräteakten 201-203 (mehr oder weniger als drei Geräteakten sind möglich) für jede einzelne Maschine 1 speichert. Jeder Maschine 1 wird damit eine eigene Geräteakte 201-203 zugeordnet. Die Geräteakte 201-203 kann von autorisierten Benutzern eingesehen werden. Dies erfolgt beispielsweise mittels Verbinden einer Nutzereinrichtung 3a-3b, bspw. ein PC, Smartphone oder dgl., mit dem Hintergrundverwaltungssystem 2. Bevorzugt wird dazu eine Datenverbindung 5, hier bspw. 5c1, 5c2 oder 5c3, aufgebaut, die das HTTP-Protokoll und die HTM-Darstellung nutzen kann. Ein Benutzer kann dann gespeicherte Daten der Geräteakte 201-203 einer bestimmten Maschine 1, für die er autorisiert ist, abfragen, Telemetriedaten in Echtzeit verfolgen, die Maschine 1 fernsteuern, usw.

Die Steuereinrichtung 110 sendet und empfängt Daten über eine Drahtlos-Sende/Empfangseinheit 1102, die in Figur 3 gezeigt ist. Die Drahtlos-Sende/Empfangseinheit 1102 ist bevorzugt ein WLAN-Modul oder ein Bluetooth-Modul, das auf der Platine der Steuereinrichtung angeordnet ist. Die Drahtlos-Sende/Empfangseinheit 1102 kann eine Drahtlosverbindung 5a mit dem Netzwerk über einen Router 4 oder einer anderen Netzwerkzugangseinheit herstellen. Es können dann Daten zwischen der Steuereinrichtung 110 über die Datenverbindungen 5a-5c an das Hintergrundverwaltungssystem 2 und daran angeschlossene/damit verbundene Nutzereinrichtung(en) 3a-3c in Echtzeit versendet und empfangen werden.

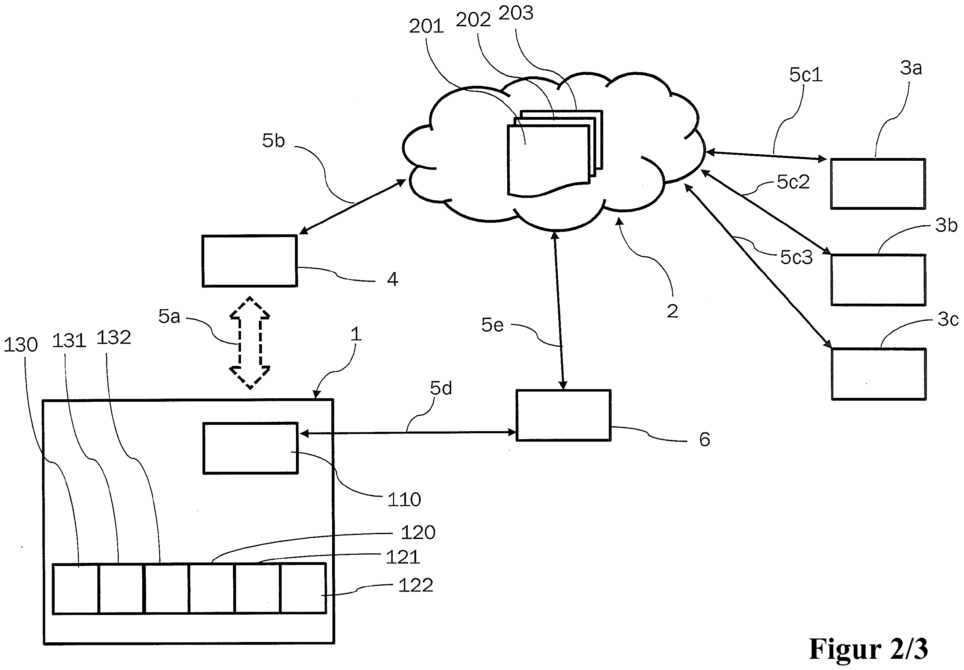

Weiterhin zeigt die Figur 2 bspw. eine Inbetriebnahme der Maschine 1. Die Steuervorrichtung 110 weist, wie die Figur 3 schematisch zeigt, einen oder mehrere Anschlüsse 1106 für Kabelverbindungen, bspw. USB, Mini-USB usw., auf, an die ein Servicetechniker bei der Inbetriebnahme einen Rechner 6 oder ein mobiles internetfähiges Endgerät mittels Kabelverbindung 5d anschließt. Weiterhin wird eine Datenverbindung 5e zu dem Netzwerk aufgebaut. In dieser Systemkonfiguration kann dann die Firmware der Maschine 1, die vor der Inbetriebnahme nicht auf der Steuervorrichtung 110 installiert war, von dem Hintergrundverwaltungssystem 2 heruntergeladen und auf die Steuereinrichtung 110 aufgespielt werden. Der Anschluss 1106 für Kabelverbindungen kann über eine optionale mechanische Brücke 1107 "aktivierbar" bzw. freigegeben werden (Fig. 3). Ebenfalls kann der Anschluss 1106 für Kabelverbindungen auch hilfsweise genutzt werden, wenn die Drahtlosverbindung 5a nicht aufgebaut werden soll/kann; bspw. bei einer Wartung oder Reparatur der Maschine 1 oder einem Defekt der Drahtlos-Sende/Empfangseinheit 1102.

Figur 3 zeigt ferner die Steuereinrichtung 110 und die elektrische Verbindungen 1110 zu den Aktoren und Sensoren 120-123, 130-132 der Maschine 1. Die Verbindungen 1110 können kabellos oder kabelgebunden ausgeführt sein. Es können Busverbindungen oder einzelne Verbindungen genutzt werden. Über die Verbindungen 1110 werden Zustandswerte, Sensormesswerte, Steuerbefehle, usw. zwischen den Aktoren und Sensoren 120-123, 130-132 und der Steuereinrichtung 110 ausgetauscht bzw. übertragen. Die Verbindungen sind mit dem Eingang oder den Eingängen 1104 und dem Ausgang oder den Ausgängen 1105 der Steuereinrichtung 110 verbunden. Die Steuereinrichtung 110 ist bevorzugt auf einer Leiterplatine angeordnet oder wird besonders bevorzugt von einer solchen gebildet, auf der die genannten Ein- und Ausgänge 1104, 1105 angeordnet sind, genauso wie der Kabeldatenanschluss 1106, ein Spannungsanschluss 1107, die beschriebene Brücke 1108 und weitere Datenverbindungsanschlüsse 1109. Ferner sind auf der Leiterplatine die Drahtlos-Sende/Empfangseinheit 1102 und eine Recheneinheit 1103 angeordnet, die in einem Kernmodul 1101 zusammengefasst angeordnet sein können. Die Leiterbahnen oder Kabelleitungen 1120 sind in der Figur 3 rein beispielshaft aufgezeigt. Die oben genannten Komponenten der Steuereinrichtung 110 können auch in einer anderen Weise miteinander elektrisch verbunden werden. Z.B. können die gezeigten Leitungen zwischen dem Kernmodul 1101 und den Ein-/Ausgängen 1104, 1105 wegfallen und durch einzelne Verbindungen 1120 zwischen den Ein-/Ausgängen 1104, 1105 und der Drahtlos-Sende/Empfangseinheit 1102 und/oder der Recheneinheit 1103 ersetzt sein. Vorteilhaft ist, dass die Steuereinrichtung 110 eine möglichst geringe Anzahl von Komponenten aufweist, so dass deren Komplexität und Herstellungskosten gering bleiben und dass eine Einheit zum kabel- bzw. drahtlosen Versenden und Empfangen von Daten direkt integriert ist. Letzteres macht es u.a. möglich, dass Daten direkt, ohne einen zwischengeschalteten PC, an das Hintergrundverwaltungssystem 2 versendet werden können.

Die (Roh-)Daten, die in dem Hintergrundverwaltungssystem 2 je Geräteakte 201-204 bzw. Maschine 1 eingehen, werden gespeichert und ausgewertet, um einem Benutzer aufbereitete Informationen, bspw. über den Zustand der Maschine und/oder deren Nutzung, anbieten zu können. Beispielsweise wird, wenn beobachtet wird, dass für längere Zeit keine Spannung an die Maschine 1 angelegt wurde, einem Servicetechniker oder dgl. eine Nachricht von dem Hintergrundverwaltungssystem 2 gesendet, die darüber informiert, dass die Anlage ggf. außer Betrieb genommen wurde. Bei einer Hebebühne mit zwei Säulen können ferner auch die Hubspindeln oder Hydraulikventile überwacht werden. Wenn beispielsweise festgestellt wird, dass diese über einen längeren Zeitraum unterschiedliche Betriebswerte bzw. Zustandswerte ausgeben, kann eine Nachricht von dem Hintergrundverwaltungssystem 2 darüber informieren, dass ggf. eine Wartung dieser Bauteile durchgeführt werden sollte, um einen möglichen Defekt zu verhindern. Lastsensoren können zudem Informationen darüber liefern, ob eine Hubvorrichtung innerhalb der Gewichtsspezifikationen genutzt wird. Das Hintergrundverwaltungssystem 2 ist dabei so eingerichtet, dass die Rohdaten zu aussagekräftigen und schnell interpretierbaren Auswertedaten und/oder Auswertungsaussagen verarbeitet werden. Ein Beispiel für eine Auswertungsaussage sei wie folgt: Die Werte eines Temperatursensors eines Aktors der Maschine 1 werden überwacht. Es wird ein vorbestimmtes Muster des Temperaturverlaufes von der Auswertungslogik des Hauptverwaltungssystems 2 (bevorzugt automatisiert) erfasst, bspw. das Überschreiten eines zeitlichen Mittelwertes der Temperaturmesswerte über einen vorbestimmten ununterbrochenen Zeitraum. In diesem Fall wird ein bestimmter kurz bevorstehender Defekt oder ein Defekt, der mit dem beobachten Temperaturverlaufsmuster korreliert, automatisiert festgestellt und es wird ein zuständiger Servicetechniker informiert. Die Information kann beispielsweise lauten, dass der betroffene Aktor wahrscheinlich kurz vor einem Defekt steht und möglichst zeitnah ausgetauscht werden sollte.

Ferner ermöglicht das Versenden von Telemetriedaten einem Nutzer die Überwachung und Fernsteuerung der Maschine 1, die der Nutzer an einer Nutzereinrichtung 3a-3c abrufen kann, bspw. mittels eines Dienstes den das Hintergrundverwaltungssystem 2 bereitstellt, z.B. eines im Internet abrufbaren grafischen Mensch-Maschine-Schnittstelle.

Ferner kann das Hintergrundverwaltungssystem 2 auch so eingerichtet sein, dass Aktionen der Maschine 1 unter dem Vorbehalt der Freigabe durch das Hintergrundverwaltungssystem 2 stehen; bspw. um unbefugten Zugang und Nutzung der Prüfvorrichtung zu unterbinden oder um nutzungsbasierte Kosten- und Leihanwendungen zu ermöglichen. Beispielsweise kann die Firmware der Steuereinrichtung 110 so eingerichtet sein, dass vor der Ausführung einer Aktion, bspw. Anheben eines Lastarms einer Hebebühne, zunächst eine Anfrage an das Hintergrundverwaltungssystem 2 gesendet wird, die dann einen Freigabebefehl zurücksendet.

Ferner können auch Notfallprozeduren mittels der Steuereinrichtung 110 bzw. im Systemverbund mit dem Hintergrundverwaltungssystem 2 realisiert werden. Beispielsweise kann die Eingabe einer festgelegten Notfallsequenz an einer Tastatur der Prüfvorrichtung 1 eine direkte Nachricht an einen Servicetechniker auslösen, die über das Netzwerk und das Hintergrundverwaltungssystem 2 übertragen wird. Der Servicetechniker kann dann anhand der Echtzeitdaten von der Maschine 1 sofort eine Diagnose des Notfalls durchführen.

Zusammenfassend ist festzuhalten, dass eine Maschine 1 bzw. eine Steuereinrichtung 110 bereitgestellt werden können, die in Echtzeit, direkt und kabellos mit einem Hintergrundverwaltungssystem 2 verbunden ist und kommuniziert. Das System umfassend die Maschine 1 bzw. die Steuereinrichtung 110 und das Hintergrundverwaltungssystem 2 eröffnet damit neue technische Möglichkeiten, die dazu führen, dass die Maschine 1 u.a. besser planbar und kostengünstiger wart- und reparierbar ist sowie zuverlässiger und mit mehr Produktivzeit arbeiten kann.

## Patentansprüche

1. Steuereinrichtung (110) zur Steuerung einer Fahrzeugprüfvorrichtung oder einer Fahrzeughebevorrichtung (1), die dazu eingerichtet ist, mit einem oder mehreren Aktoren (130-132) der Fahrzeugprüfvorrichtung oder Fahrzeughebevorrichtung (1) Daten auszutauschen und/oder mit einem oder mehreren Sensoren (120-122) der Fahrzeugprüfvorrichtung oder Fahrzeughebevorrichtung (1) Daten auszutauschen, wobei die Steuereinrichtung (110) eine Recheneinheit (1103) aufweist, die dazu eingerichtet ist, den Aktor oder die Aktoren (130-132) der Fahrzeugprüfvorrichtung oder Fahrzeughebevorrichtung (1) anzusteuern und Daten von dem Sensor oder den Sensoren (120-122) abzufragen, und eine Drahtlos-Sende/Empfangseinheit (1102), die dazu eingerichtet ist, Daten von dem Aktor oder den Aktoren (130-132) und/oder dem Sensor oder den Sensoren (120-122) drahtlos an ein oder mehrere Netzwerk(e) zu übertragen und/oder Daten von dem Netzwerk oder den Netzwerken zu empfangen,
**gekennzeichnet dadurch, dass** die Steuereinrichtung über das Netzwerk oder die Netzwerke mit einem Hintergrundverwaltungssystem (2) verbindbar ist, an das die Daten der Steuereinrichtung (110) übertragen werden und/oder von dem Daten an die Steuereinrichtung (110) übertragen werden, und
die Steuereinrichtung (110) dazu eingerichtet ist, vor dem Senden eines Steuerbefehls an einen Aktor der Fahrzeugprüfvorrichtung oder Fahrzeughebevorrichtung (1) eine Anfrage an das Hintergrundverwaltungssystem (2) zu übertragen und den Steuerbefehl nicht zu senden, wenn das Hintergrundverwaltungssystem (2) das Senden des Steuerbefehls nicht freigibt.

2. Steuereinrichtung nach Patentanspruch 1, **gekennzeichnet dadurch, dass** die Steuereinrichtung (110) eine Leiterplatte aufweist, auf der die Recheneinheit (1103) und die Drahtlos-Sende/Empfangseinheit (1102) angeordnet sind und diese mittels Leiterbahnen elektrisch miteinander verbunden sind, wobei die Leiterplatte ferner Ein- und Ausgänge für Leitungen zu bzw. von den Aktoren und/oder Sensoren und einen Spannungsversorgungsanschluss aufweist.

3. Steuereinrichtung nach zumindest einem der voranstehenden Patentansprüche, **gekennzeichnet dadurch, dass** die Steuereinrichtung (110) bei Auslieferung vor einer Inbetriebnahme der Fahrzeugprüfvorrichtung oder Fahrzeughebevorrichtung (1) keine Firmware gespeichert hält und die Steuereinrichtung (110) dazu eingerichtet ist, mittels einer Datenverbindung (5d, 5e) über das Netzwerk oder die Netzwerke die Firmware von dem Hintergrundverwaltungssystem (2) zu beziehen bzw. übertragen zu bekommen und zu speichern, und ferner die Steuereinrichtung (110) dazu eingerichtet ist, Firmwareupdates mittels einer Datenverbindung (5d, 5e; 5a, 5b) über das Netzwerk oder die Netzwerke von dem Hintergrundverwaltungssystem (2) zu beziehen bzw. übertragen zu bekommen und zu speichern.

4. Steuereinrichtung (110) gemäß zumindest einem der voranstehenden Patentansprüche, wobei die Steuereinrichtung (110) dazu eingerichtet ist, nach Empfang einer vorbestimmten Befehlssequenz, ein Notfallsignal an das Hintergrundverwaltungssystem (2) zu übertragen und das Hintergrundverwaltungssystem (2) einen Ruf bzw. eine Nachricht an eine vorbestimmte Kontaktstelle abgibt.

5. Steuereinrichtung nach zumindest einem der voranstehenden Patentansprüche, **gekennzeichnet dadurch, dass** die Datenverbindung (5d, 5e) zu dem Hintergrundverwaltungssystem (2) zumindest eine drahtgebundene Datenverbindungsstrecke (5d) zwischen der Steuereinrichtung (110) und einer netzwerk- und/oder internetfähigen Einrichtung (6) und zumindest eine kabellose oder kabelgebundene Datenverbindungsstrecke (5e) zwischen der netzwerk- und/oder internetfähigen Einrichtung (6) und dem Hintergrundverwaltungssystem (2) umfasst.

6. Steuereinrichtung nach zumindest einem der voranstehenden Patentansprüche, **gekennzeichnet dadurch, dass** die Drahtlos-Sende/Empfangseinheit (1103) ein Kryptografiemodul aufweist, das dazu eingerichtet ist, Daten, die von der Drahtlos-Sende/Empfangseinheit (1103) versendet oder empfangen werden, zu ver- bzw. entschlüsseln oder mit einer digitalen Signatur zu versehen.

7. Steuereinrichtung nach zumindest einem der voranstehenden Patentansprüche, **gekennzeichnet dadurch, dass** die Steuereinrichtung (110) dazu eingerichtet ist, in vorbestimmten Zeitabständen, die gleichmäßig sein können, Daten drahtlos über das Netzwerk an das Hintergrundverwaltungssystem (2) zu übertragen.

8. Steuereinrichtung nach zumindest einem der voranstehenden Patentansprüche, **gekennzeichnet dadurch, dass** die Steuereinrichtung (110) dazu eingerichtet ist, in vorbestimmten Zeitabständen, die gleichmäßig sein können, Daten drahtlos über das Netzwerk an das Hintergrundverwaltungssystem (2) zu übertragen, wobei
die übertragenen Daten Messdaten des Sensors bzw. der Sensoren (120-123) der Maschine (1) und/oder Mess- bzw. Zustandsdaten des Aktors bzw. der Aktoren (130-132) der Maschine (1) umfassen.

9. Steuereinrichtung nach zumindest einem der voranstehenden Patentansprüche, **gekennzeichnet dadurch, dass** die Steuereinrichtung (110) dazu eingerichtet ist, in vorbestimmten Zeitabständen, die gleichmäßig sein können, Daten drahtlos über das Netzwerk mittels Message Queue Telemetry Transport (MQTT) Protokoll an das Hintergrundverwaltungssystem (2) zu übertragen.

10. Hintergrundverwaltungssystem (2), das dazu eingerichtet ist, Daten von einer Steuereinrichtung (110) gemäß zumindest einem der voranstehenden Patentansprüche übertragen zu bekommen oder dahin zu übertragen, wobei das Hintergrundverwaltungssystem (2) mit einem oder mehreren Netzwerk(en) verbindbar ist und eine Vielzahl von Rechnern umfasst, die dazu eingerichtet sind, Daten zu empfangen, zu speichern, zu verarbeiten und/oder an die Steuereinrichtung (110) oder einer mit dem Netzwerk oder den Netzwerken verbundenen Nutzereinrichtung (3a-3c) zu übertragen,
**gekennzeichnet dadurch, dass** das Hintergrundverwaltungssystem (2) dazu eingerichtet ist, für jede Steuereinrichtung (110) bzw. Fahrzeugprüfvorrichtung oder Fahrzeughebevorrichtung (1) eine digitale Geräteakte (201-203) zu speichern, die Informationen über die Fahrzeugprüfvorrichtung oder Fahrzeughebevorrichtung (1) enthält, welche die daran durchgeführten Servicemaßnahmen, Fehlermeldungen, übermittelte Rohdaten von Sensoren (120-123) und Aktoren (130-132), Auswertungsdaten der Rohdaten, eine oder mehrere Konfigurationen der Fahrzeugprüfvorrichtung oder Fahrzeughebevorrichtung (1) und/oder Firmware beinhalten, wobei die Daten der Geräteakte (201-203) verschlüsselt gespeichert sind.

11. Hintergrundverwaltungssystem nach Patentanspruch 10, **gekennzeichnet dadurch, dass** das Hintergrundverwaltungssystem (2) dazu eingerichtet ist, an eine Nutzereinrichtung (3a-3c) Daten per Hypertext Markup Language Protokoll auszugeben und deren Anzeige in vorbestimmten Zeitabständen zu aktualisieren.

12. Hintergrundverwaltungssystem, nach zumindest einem der Patentansprüche 10 und 11, **gekennzeichnet dadurch, dass** das Hintergrundverwaltungssystem (2) dazu eingerichtet ist, Rohdaten, der Sensoren (120-123) und Aktoren (130-132) der Fahrzeugprüfvorrichtung oder Fahrzeughebevorrichtung (1), die von der Steuereinrichtung (110) übertragen wurden, auszuwerten und Auswertedaten zu erstellen, die insbesondere Informationen über den Zustand der Fahrzeugprüfvorrichtung oder Fahrzeughebevorrichtung (1), deren Verwendung und deren Einsatzzeiten enthalten.

13. Hintergrundverwaltungssystem, nach Patentanspruch 12, wobei das Hintergrundverwaltungssystem (2) dazu eingerichtet ist, die Auswertedaten automatisch an eine Nutzereinrichtung (3a-3c) zu übertragen, wenn ein vordefiniertes Ereignis bei der Auswertung ermittelt wurde.

14. Verfahren zum Übertragen von Daten zwischen einer Steuereinrichtung (110) gemäß zumindest einem der Patentansprüche 1 bis 9 und einem Hintergrundverwaltungssystem (2) gemäß zumindest einem der Patentansprüche 10 bis 13 , wobei eine netzwerk- und/oder internetfähige Einrichtung (6) per Kabelverbindung (5d) mit der Steuereinrichtung (110) verbunden wird, die netzwerk- und/oder internetfähigen Einrichtung (6) mit einem Netzwerk, an das das Hintergrundverwaltungssystem (2) angebunden ist, verbunden wird, und Daten von einem für eine Fahrzeugprüfvorrichtung oder Fahrzeughebevorrichtung (1) vorbestimmten Speicherplatz des Hintergrundverwaltungssystems (2) heruntergeladen und in der Steuereinrichtung (110) abgespeichert werden und/oder Daten von der Steuereinrichtung (110) an das Hintergrundverwaltungssystem (2) übertragen werden; oder
eine drahtlose Datenverbindung (5a) zwischen der Steuereinrichtung (110) und einem Router (4) erstellt wird, der Router (4) mit einem Netzwerk, an das das Hintergrundverwaltungssystem (2) angebunden ist, verbunden wird, und Daten von einem für die Fahrzeugprüfvorrichtung oder Fahrzeughebevorrichtung (1) vorbestimmten Speicherplatz des Hintergrundverwaltungssystems (2) heruntergeladen und in der Steuereinrichtung (110) abgespeichert werden oder Daten von der Steuereinrichtung (110) an das Hintergrundverwaltungssystem (2) übertragen werden,
wobei vor einem Senden eines Steuerbefehls an einen Aktor der Fahrzeugprüfvorrichtung oder Fahrzeughebevorrichtung (1) eine Anfrage an das Hintergrundverwaltungssystem (2) übertragen wird und der Steuerbefehl nicht gesendet wird, wenn das Hintergrundverwaltungssystem (2) das Senden des Steuerbefehls nicht freigibt.

## Claims

1. A control device (110) for controlling a vehicle testing apparatus or a vehicle lifting apparatus (1), configured to exchange data with one or more actuators (130-132) of said vehicle testing apparatus or said vehicle lifting apparatus (1) and/or to exchange data with one or more sensors (120-122) of said vehicle testing apparatus or said vehicle lifting apparatus (1), said control device (110) comprising a calculation unit (1103), configured to drive said actuator or actuators (130-132) of said vehicle testing apparatus or said vehicle lifting apparatus (1) and to query data from said sensor or sensors (120-122), and a transceiver (1102), configured to wirelessly transmit data from said actuator or actuators (130-132) and/or said sensor or sensors (120-122) to one or more network(s) and/or to receive data from said network or networks,
**characterized in** said control device being connectable over said network or networks to a background administration system (2), to which the data of said control device (110) are transmitted and/or from which data are transmitted to said control device (110), and
said control device (110) being configured to transmit, before sending a control instruction to an actuator of said vehicle testing apparatus or said vehicle lifting apparatus (1), a request to said background administration system (2) and, when said background administration system (2) does not approve sending said control instruction, not to send said control instruction.

2. The control device of claim 1, **characterized in that** said control device (110) comprises a circuit board, on which said calculation unit (1103) and said transceiver (1102) are arranged and electrically connected to each other via conductor paths, said circuit board further comprising inputs and outputs for lines to and from, respectively, said actuators and/or sensors, and a voltage supply terminal.

3. The control device according to at least one of the preceding claims, **characterized in that** said control device (110), on shipment before commissioning of said vehicle testing apparatus or said vehicle lifting apparatus (1), holds no stored Firmware, and said control device (110) is configured to obtain or have transmitted, respectively, said firmware via a data connection (5d, 5e) over said network or networks from said background administration system (2) and to store it, and further said control device (110) is configured to obtain or have transmitted, respectively, firmware updates via a data connection (5d, 5e; 5a, 5b) over said network or networks from said background administration system (2) and to store them.

4. The control device (110) according to at least one of the preceding claims, said control device (110) configured to transmit, after receipt of a predetermined instruction sequence, an emergency signal to said background administration system (2), and said background administration system (2) delivering a call or a message, respectively, to a predetermined contact point.

5. The control device according to at least one of the preceding claims, **characterized in that** said data connection (5d, 5e) to said background administration system (2) comprises at least a wired data link (5d) between said control device (110) and a network-enabled and/or web-enabled device (6) and at least a wireless or wired data link (5e) between said network-enabled and/or web-enabled device (6) and said background administration system (2).

6. The control device according to at least one of the preceding claims, **characterized in that** said transceiver (1103) comprises a cryptographic module configured to encrypt or decrypt, respectively, data sent or received by said transceiver (1103), or to provide them with a digital signature.

7. The control device according to at least one of the preceding claims, **characterized in that** said control device (110) is configured to wirelessly transmit data in predetermined time intervals, which may be uniform, over said network to said background administration system (2).

8. The control device according to at least one of the preceding claims, **characterized in that** said control device (110) is configured to wirelessly transmit data in predetermined time intervals, which may be uniform, over said network to said background administration system (2), wherein
the transmitted data comprise measurement data of said sensor or sensors (120-123) of said machine (1), respectively, and/or measurement or state data, respectively, of said actuator or actuators (130-132) of said machine (1), respectively.

9. The control device according to at least one of the preceding claims, **characterized in that** said control device (110) is configured to wirelessly transmit data in predetermined time intervals, which may be uniform, over said network to said background administration system (2) by means of a Message Queue Telemetry Transport (MQTT) protocol.

10. A background administration system (2), configured to have data from a control device (110) according to at least one of the preceding claims transmitted or transmit them there, wherein said background administration system (2) is connectable to one or more network(s) and comprises a multitude of computers, configured to receive, store, process, and/or transmit data to said control device (110) or a user device (3a-3c) connected to said network or networks,
**characterized in that** said background administration system (2) is configured to store, for each control device (110) and vehicle testing apparatus or vehicle lifting apparatus (1), respectively, a digital device file (201-203) including information on said vehicle testing apparatus or said vehicle lifting apparatus (1), which contain the service measures conducted thereon, error messages, raw data delivered from sensors (120-123) and actuators (130-132), evaluation data of the raw data, one or more configurations of said vehicle testing apparatus or said vehicle lifting apparatus (1), and/or Firmware, the data of said device file (201-203) being stored in an encrypted manner.

11. The background administration system of claim 10, **characterized in that** said background administration system (2) is configured to output data via a Hypertext Markup Language protocol to a user device (3a-3c) and to update their display in predetermined time intervals.

12. The background administration system according to at least one of the claims 10 and 11, **characterized in that** said background administration system (2) is configured to evaluate raw data of said sensors (120-123) and actuators (130-132) of said vehicle testing apparatus or said vehicle lifting apparatus (1), which have been transmitted from said control device (110), and to create evaluation data, especially including information on the state of said vehicle testing apparatus or vehicle lifting apparatus (1), their use, and their operating times.

13. The background administration system of claim 12, said background administration system (2) configured to automatically transmit the evaluation data to a user device (3a-3c) if a predefined event has been established in the evaluation.

14. A method for transmitting data between a control device (110) according to at least one of the claims 1 to 9 and a background administration system (2) according to at least one of the claims 10 to 13 , wherein a network-enabled and/or web-enabled device (6) is connected via a cable connection (5d) to said control device (110), said network-enabled and/or web-enabled device (6) is connected to a network, to which said background administration system (2) is attached, and data are downloaded from a memory space, predetermined for a vehicle testing apparatus or vehicle lifting apparatus (1), of said background administration system (2) and stored in said control device (110), and/or data are transmitted from said control device (110) to said background administration system (2); or
a wireless data connection (5a) is created between said control device (110) and a router (4), said router (4) is connected to a network, to which said background administration system (2) is attached, and data are downloaded from a memory space, predetermined for said vehicle testing apparatus or vehicle lifting apparatus (1), of said background administration system (2) and stored in said control device (110), or data are transmitted from said control device (110) to said background administration system (2),
wherein, before sending a control instruction to an actuator of said vehicle testing apparatus or vehicle lifting apparatus (1), a request is transmitted to said background administration system (2), and the control instruction is not sent, when said background administration system (2) does not approve sending said control instruction.

## Revendications

1. Dispositif de commande (110) pour commander un dispositif de contrôle de véhicule ou un dispositif de levage de véhicule (1), qui est conçu pour échanger des données avec un ou plusieurs actionneurs (130-132) du dispositif de contrôle de véhicule ou du dispositif de levage de véhicule (1) et/ou pour échanger des données avec un ou plusieurs capteurs (120-122) du dispositif de contrôle de véhicule ou du dispositif de levage de véhicule (1), le dispositif de commande (110) comprenant une unité de calcul (1103) qui est conçue pour piloter l'actionneur ou les actionneurs (130-132) du dispositif de contrôle de véhicule ou du dispositif de levage de véhicule (1) et pour interroger les données du capteur ou des capteurs (120-122), et une unité d'émission/réception sans fil (1102) qui est conçue pour transmettre sans fil des données de l'actionneur ou des actionneurs (130-132) et/ou du capteur ou des capteurs (120-122) à un ou plusieurs réseaux et/ou pour recevoir des données du réseau ou des réseaux,
**caractérisé en ce que**
par l'intermédiaire du réseau ou des réseaux, le dispositif de commande peut être connecté à un système de gestion d'arrière-plan (2) vers lequel les données du dispositif de commande (110) sont transmises et/ou à partir duquel des données sont transmises au dispositif de commande (110), et
le dispositif de commande (110) est conçu pour transmettre, avant l'émission d'un ordre de commande à un actionneur du dispositif de contrôle de véhicule ou du dispositif de levage de véhicule (1), une interrogation au système de gestion d'arrière-plan (2) et pour ne pas émettre l'ordre de commande si le système de gestion d'arrière-plan (2) n'autorise pas l'émission de l'ordre de commande.

2. Dispositif de commande selon la revendication 1,
**caractérisé en ce que** le dispositif de commande (110) comprend une carte à circuit imprimé sur laquelle l'unité de calcul (1103) et l'unité d'émission/réception sans fil (1102) sont disposées et connectées électriquement entre elles au moyen de pistes conductrices, la carte à circuit imprimé présentant en outre des entrées et des sorties pour des lignes vers ou depuis les actionneurs et/ou les capteurs, et une connexion d'alimentation en tension.

3. Dispositif de commande selon l'une au moins des revendications précédentes,
**caractérisé en ce que** lors de l'expédition, avant une mise en service du dispositif de contrôle de véhicule ou du dispositif de levage de véhicule (1), le dispositif de commande (110) ne tient pas de micrologiciel (firmware) en mémoire, et le dispositif de commande (110) est conçu pour obtenir ou se faire transmettre le micrologiciel à partir du système de gestion d'arrière-plan (2) au moyen d'une liaison de données (5d, 5e) via le réseau ou les réseaux, et pour le stocker, et en outre, le dispositif de commande (110) est conçu pour obtenir ou se faire transmettre des mises à jour du micrologiciel à partir du système de gestion d'arrière-plan (2) au moyen d'une liaison de données (5d, 5e ; 5a, 5b) via le réseau ou les réseaux, et pour les stocker.

4. Dispositif de commande (110) selon l'une au moins des revendications précédentes,
**caractérisé en ce que** le dispositif de commande (110) est conçu pour, après réception d'une séquence d'ordres prédéterminée, transmettre un signal d'urgence au système de gestion d'arrière-plan (2), et le système de gestion d'arrière-plan (2) émet un appel ou un message à un centre de contact prédéterminé.

5. Dispositif de commande selon l'une au moins des revendications précédentes,
**caractérisé en ce que** la liaison de données (5d, 5e) vers le système de gestion d'arrière-plan (2) comprend au moins un trajet de liaison de données filaire (5d) entre le dispositif de commande (110) et un dispositif (6) compatible avec réseau et/ou Internet et au moins un trajet de liaison de données sans fil ou filaire (5e) entre le dispositif (6) compatible avec réseau et/ou Internet et le système de gestion d'arrière-plan (2).

6. Dispositif de commande selon l'une au moins des revendications précédentes,
**caractérisé en ce que** l'unité d'émission/réception sans fil (1103) comporte un module de cryptographie qui est conçu pour crypter ou décrypter des données émises ou reçues par l'unité d'émission/réception sans fil (1103) ou pour les munir d'une signature numérique.

7. Dispositif de commande selon l'une au moins des revendications précédentes,
**caractérisé en ce que** le dispositif de commande (110) est conçu pour transmettre des données sans fil au système de gestion d'arrière-plan (2) via le réseau à des intervalles de temps prédéterminés qui peuvent être réguliers.

8. Dispositif de commande selon l'une au moins des revendications précédentes,
**caractérisé en ce que** le dispositif de commande (110) est conçu pour transmettre des données sans fil au système de gestion d'arrière-plan (2) via le réseau à des intervalles de temps prédéterminés qui peuvent être réguliers,
les données transmises comprenant des données de mesure du capteur ou des capteurs (120-123) de la machine (1) et/ou des données de mesure ou d'état de l'actionneur ou des actionneurs (130-132) de la machine (1).

9. Dispositif de commande selon l'une au moins des revendications précédentes,
**caractérisé en ce que** le dispositif de commande (110) est conçu pour transmettre des données sans fil au système de gestion d'arrière-plan (2) via le réseau au moyen du protocole MQTT (Message Queue Telemetry Transport), à des intervalles de temps prédéterminés qui peuvent être réguliers.

10. Système de gestion d'arrière-plan (2) conçu pour se faire transmettre des données à partir d'un dispositif de commande (110) selon l'une au moins des revendications précédentes, ou pour les transmettre à celui-ci, le système de gestion d'arrière-plan (2) pouvant être connecté à un ou plusieurs réseaux et comprenant une pluralité d'ordinateurs conçus pour recevoir, stocker, traiter et/ou transmettre des données au dispositif de commande (110) ou à un dispositif utilisateur (3a-3c) connecté au réseau ou aux réseaux,
**caractérisé en ce que** le système de gestion de l'arrière-plan (2) est conçu pour stocker, pour chaque dispositif de commande (110) ou dispositif de contrôle de véhicule ou dispositif de levage de véhicule (1), un dossier numérique d'appareil (201-203) qui contient des informations relatives au dispositif de contrôle de véhicule ou dispositif de levage de véhicule (1), contenant les interventions de service effectuées sur celui-ci, les messages d'erreur, les données brutes transmises des capteurs (120-123) et des actionneurs (130-132), les données d'évaluation des données brutes, une ou plusieurs configurations du dispositif de contrôle de véhicule ou dispositif de levage de véhicule (1) et/ou le micrologiciel, les données du dossier d'appareil (201-203) étant mémorisées sous forme cryptée.

11. Système de gestion d'arrière-plan selon la revendication 10,
**caractérisé en ce que** le système de gestion d'arrière-plan (2) est conçu pour délivrer à un dispositif utilisateur (3a-3c) des données par protocole Hypertext Markup Language et pour mettre à jour leur affichage à des intervalles de temps prédéterminés.

12. Système de gestion de l'arrière-plan selon l'une au moins des revendications 10 et 11,
**caractérisé en ce que** le système de gestion de l'arrière-plan (2) est conçu pour évaluer des données brutes des capteurs (120-123) et des actionneurs (130-132) du dispositif de contrôle de véhicule ou dispositif de levage de véhicule (1), qui ont été transmises à partir du dispositif de commande (110), et pour produire des données d'évaluation qui contiennent en particulier des informations relatives à l'état du dispositif de contrôle de véhicule ou dispositif de levage de véhicule (1), son utilisation et ses temps de fonctionnement.

13. Système de gestion d'arrière-plan selon la revendication 12,
le système de gestion d'arrière-plan (2) étant conçu pour transmettre automatiquement les données d'évaluation à un dispositif utilisateur (3a-3c) lorsqu'un événement prédéfini a été déterminé lors de l'évaluation.

14. Procédé de transmission de données entre un dispositif de commande (110) selon l'une au moins des revendications 1 à 9 et un système de gestion d'arrière-plan (2) selon l'une au moins des revendications 10 à 13, dans lequel un dispositif (6) compatible avec réseau et/ou Internet est connecté au dispositif de commande (110) par une connexion par câble (5d), le dispositif (6) compatible avec réseau et/ou Internet est connecté à un réseau auquel le système de gestion d'arrière-plan (2) est lié, et des données sont téléchargées à partir d'un espace mémoire du système de gestion d'arrière-plan (2) prédéterminé pour un dispositif de contrôle de véhicule ou dispositif de levage de véhicule (1) et sont stockées dans le dispositif de commande (110), et/ou des données sont transmises du dispositif de commande (110) au système de gestion d'arrière-plan (2) ; ou
une liaison de données sans fil (5a) est établie entre le dispositif de commande (110) et un routeur (4), le routeur (4) est connecté à un réseau auquel le système de gestion d'arrière-plan (2) est lié, et des données sont téléchargées à partir d'un espace mémoire du système de gestion d'arrière-plan (2) prédéterminé pour le dispositif de contrôle de véhicule ou dispositif de levage de véhicule (1) et sont stockées dans le dispositif de commande (110), ou des données sont transmises du dispositif de commande (110) au système de gestion d'arrière-plan (2),
avant l'émission d'un ordre de commande à un actionneur du dispositif de contrôle de véhicule ou dispositif de levage de véhicule (1), une interrogation est transmise au système de gestion d'arrière-plan (2), et l'ordre de commande n'est pas émis si le système de gestion d'arrière-plan (2) n'autorise pas l'émission de l'ordre de commande.
